# EUROPÄISCHE PATENTSCHRIFT

(11) **EP 0 708 344 B1**
(45) Veröffentlichungstag und Bekanntmachung des Hinweises auf die Patenterteilung: **09.01.2002**
(21) Anmeldenummer: 95114427.8
(22) Anmeldetag: 14.09.1995
(51) Int. Cl.: G01S 17/46, B61K 9/08, G01B 11/02

(54) **Messsystem zur berührungslosen Messung des Vertikal- und Horizontalabstandes zwischen Fahrzeug und Schiene**
Non-contact measuring system for measuring vertical and horizontal distance between vehicle and rail
Système de mesure sans contact pour mesurer la distance verticale et horizontale entre véhicule et rail

(30) Priorität: 17.09.1994 DE 4433185; 25.08.1995 DE 19531336
(43) Veröffentlichungstag der Anmeldung: 24.04.1996
(73) Patentinhaber: DEUTSCHE BAHN AG, 10365 Berlin (DE)
(72) Erfinder: Höhberger, Hans-Jörg, Dr., D-85604 Zorneding (DE); Rechel, Martin, D-32429 Minden (DE)
(74) Vertreter: Zinken-Sommer, Rainer

(56) Entgegenhaltungen:
- DE-A- 4 401 020
- US-A- 3 864 039
- LEWIS R B: "TRACK-RECORDING TECHNIQUES USED ON BRITISH RAIL" IEE PROCEEDINGS B. ELECTRICAL POWER APPLICATIONS, Bd. 131, Nr. 3, 1. Mai 1984, Seiten 73-81, XP000563220

## Beschreibung

Die Erfindung betrifft ein Triangulationsmeßsystem mit horizontaler Ebene zur berührungslosen Erfassung des Vertikal- und des Horizontalabstandes von einem bewegten Bezugssystem gegen ein zylindrisch geformtes Objekt.

Zur Sicherung des Eisenbahnbetriebes ist es erforderlich, Gleislage, Fahrdrahtlage, Radstellung u. a. in gewissen zeitlichen Inspektionsintervallen zu messen, um bei unzulässigen Abweichungen Korrekturen an den Gleisen, Fahrleitungen und Fahrzeugen vornehmen zu können.

Eine Teilaufgabe hiervon ist die Messung von Abständen der Schiene von einem Bezugspunkt, z. B. von einem Achslager eines Meßfahrzeuges.

Alle bekannten Meßverfahren zur Messung von Abständen an Schienen sind optische Verfahren.

Dabei wird überwiegend das Prinzip der optischen Triangulation angewendet.

Die British Railways messen den Horizontalabstand derart, daß jede Schiene von oben beleuchtet wird und eine Kamera von oben auf die betreffende Schiene gerichtet ist. Im Idealfall ist die Fahrfläche hell und die Innenflanke ist dunkel. Der Horizontalabstand wird aus der Position des Bildes des Hell-Dunkel-Überganges auf dem Kameradetektor berechnet (Lewis R. B.: Track-recording techniques used on British Rail. IEE Proceedings, Vol. 131, Pt. B, No. 3, Mai 1984, S. 73 - 81).

In ZEV Glasers Annalen (1977) Heft 8/9 S. 391 - 394 beschreibt R. Jenzer "Eine Methode zur Erfassung der dynamischen Spurspielmeßgrößen an Schienenfahrzeugen (Radstellungsmessung)".

Bei der Meßmethode der Nederlandse Spoorwegen sind die Komponenten am Drehgestellrahmen des Meßfahrzeuges befestigt. Die zwischen Achslagern und Drehgestellrahmen vorhandene Primärfederung erzeugt aber beim Fahren eine Tauch- und Rollbewegung von einer Größenordnung, die den Antastlichtfleck ins Leere gehen ließe. Daher enthält der Projektor einen Drehspiegel, der seine Steuer-Regelgrößen über einen Rechner von einem Hilfssystem erhält, welches aus vier parallel zu den Primärfedern angebrachten Wegaufnehmern besteht (Esveld, C.: Modern railway track, MRT-Productions Duisburg (1989), S. 292 - 294).

Bei einem bekannten Verfahren zur automatischen Gleisvermessung ist auch die Messung im Weichenbereich möglich. Der untere Teil des Meßkopfes befindet sich dabei im Spurkranzschatten. Die optische Antastung erfolgt horizontal (Schuller, R.: Verfahren zur automatischen Gleisvermessung. ETR 29 (1980), S. 433 438).

In der Europäischen Patentanmeldung 0 461 628 wird ein Triangulationssystem beschrieben, das in einer Radscheibe integriert ist. Dabei ist der Radkranz mit entsprechenden Öffnungen zum Strahlaustritt und -eintritt versehen. Die Messung der horizontalen Abstände zur Schienenflanke erfolgt im Takt der Radumdrehung in dem Augenblick, wo sich die Öffnung in Höhe der Schienenflanke befindet.

Sei allen vorstehenden genannten Meßverfahren treten folgende Nachteile auf. Infolge des Fahrzeug-Transversalspieles tritt bei der Messung des Horizontalabstandes eine nichtvernachlässigbare vertikale Bewegung auf, die bei der normalen Triangulation eine vertikale Auslenkung des Antastpunktes gegen die Ideallinie zur Folge hat. Bei schrägen oder gewölbten Objekten führt dies zu einer Verfälschung der Abstandsmessung.

Der Vertikalabstand wird bei den bekannten Meßverfahren überhaupt nicht gemessen. Stattdessen wird als grobe Näherung für den Vertikalabstand der Wert des Radius des äquivalenten zylindrisch Rades genommen. Dabei wird außer acht gelassen, daß in Wirklichkeit immer Radprofile mit veränderlichem Radius, d. h. mit Kegel- oder Verschleißprofil, benutzt werden müssen, damit einseitiger Anlauf und Entgleisung durch Aufklettern unterbleiben. Ein solcher konstanter Radius kann auch nicht als Nachführsignal für die horizontale Antastung einer orthogonal nachgeführten Antastung benutzt werden. Weitere Nachteile der bekannten Meßverfahren liegen in der inhomogenen Lichtstreuung, im nicht konstanten optischen Abbildungsmaßstab und in der unvollständigen Störlichtunterdrückung. Darüber hinaus ist bei einzelnen der bekannten Meßverfahren von Nachteil, daß der Hell-Dunkel-Übergang im Übergangsbereich von Schienenkopf und Schienenflanke wegen der Krümmung des Schienenprofiles nicht scharf genug ist und zu ungenauen Messungen führt, daß in den Weichenbereichen wegen der Unterbrechungen der Strahlengänge durch Radlenker bzw. Leitschienen keine Messung möglich ist und daß wegen des geringen Signalstörverhältnisses Messungen nur bei niedrigen Geschwindigkeiten möglich sind.

Aufgabe der Erfindung ist es, den Horizontalabstand und den Vertikalabstand zwischen Fahrzeug und Schiene gleichzeitig - ohne Verfälschung durch Transversalbewegungen - bei hohen Geschwindigkeiten mit großer Genauigkeit messen zu können.

Erfindungsgemäß wird dies mit dem kennzeichnenden Merkmal des Patentanspruches 1 erreicht.

Der Vorteil liegt insbesondere in der gleichzeitigen Messung von Horizontal- und Vertikalabstand zwischen Schiene und einem Bezugssystem an einem Meßfahrzeug ohne Verfälschung durch die Transversalbewegungen des Radsatzlaufes.

Mit den kennzeichnenden Merkmalen der Patentansprüche 2 bis 12 wird eine große Meßgenauigkeit auch bei hohen Geschwindigkeiten erreicht.

Das Merkmal des Patentanspruches 13 garantiert auch bei stark verschmutzter Umgebung die Aufrechterhaltung einer große Meßgenauigkeit bei langen Meßzeiten.

Die Erfindung wird anhand der Zeichnung beschrieben. Es zeigen:
- Fig. 1:: Das Prinzip der Triangulation.
- Fig. 2:: Das Prinzip der horizontalen und der vertikalen Triangulation mit orthogonalen Nachführung.
- Fig. 3:: Der schematische Aufbau des Meßsystems in y-z-Ebene
- Fig, 4:: Der schematische Aufbau des Meßsystems in z-x-Ebene.
- Fig. 5:: Der schematische Aufbau des Meßsystems in x-y-Ebene.
- Fig. 6:: Ein Ausführungsbeispiel eines optomechanischen Strahltranslators.

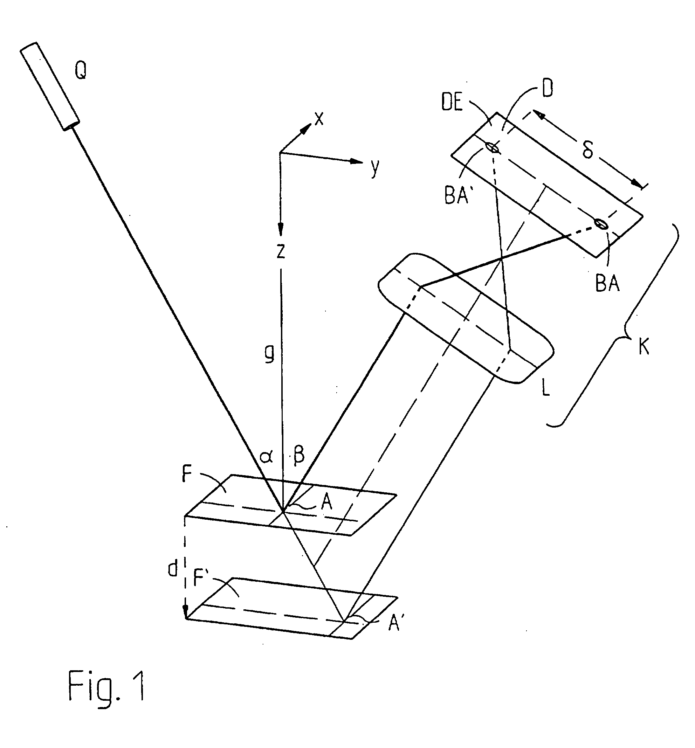

Bei der bekannten Triangulation in Fig. 1 soll die Abstandsänderung des Oberflächenelements F in z-Richtung erfaßt werden. Von der Lichtquelle Q wird unter dem Winkel α gegen die Normale ein Antastlichtfleck A gesetzt. Fest mit der Lichtquelle Q verbunden ist eine aus Linse L und Detektor D bestehende Kamera K, deren optische Achse unter dem Winkel β gegen die Normale von F gerichtet ist. Diese bildet A nach BA auf der Detektorebene DE ab. Wird nun das Oberflächenelement F in die Position F' verschoben, so entsteht ein neuer Antastlichtfleck A', der gegenüber dem alten in y-Richtung verschoben ist. A' wird von der Kamera nach BA' auf DE abgebildet. Die Differenz δ dieser beiden Positionen ist der ursprünglichen Verschiebung d des Oberflächenelements proportional, wobei der Proportionalitätsfaktor ausschließlich durch den Grundabstand g, die Winkel α und β und die optische Vergrößerung des Kamerasystems bestimmt wird.

Aus Fig. 1 werden auch die Grenzen dieses Meßprinzips deutlich. Zum einen darf das Flächenelement F in y-Richtung nicht geneigt oder gekrümmt sein, weil der Antastpunkt von A nach A' in y-Richtung fortschreitet. Zum anderen darf die Abstandsänderung nur in z-Richtung erfolgen, wenn das Flächenelement in x-Richtung geneigt und gekrümmt ist. Dieses Triangulationsprinzip läßt sich also nicht anwenden, wenn das Flächenelement F in der x-Richtung gekrümmt ist und die Abstandsänderung eine x-Komponente hat.

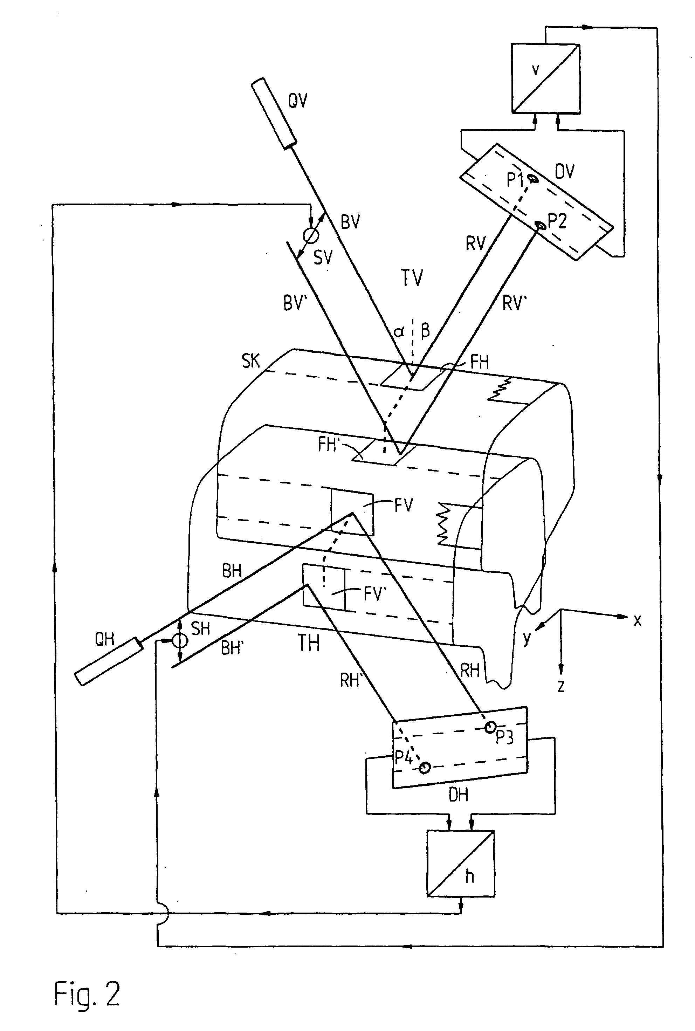

Im oberen Teil von Fig. 2 ist die vertikale Triangulation TV und im unteren Teil die horizontale Triangulation TH dargestellt. Als Meßobjekt ist ein Teil eines Schienenkopfes SK in zwei verschiedenen Stellungen (Translation in x- und z-Richtung) gezeichnet, mit dem annähernd horizontalen Antastflächenstück FH, und dem annähernd vertikalen Antastflächenstück FV.

Zunächst wird das Flächenelement FH betrachtet. Der von der Lichtquelle QV ausgehende Beleuchtungsstrahl BV trifft dieses unter dem Winkel α gegen die Normale in der Mitte. Das Licht wird in dem Winkel β reflektiert, bildet den Strahl RV und trifft den Detektor DV im Punkt P1. Der Schienenkopf SK führt nun eine Translation durch, die zur Folge hat, daß FH in FH' übergeht. Die Verlängerung des Strahls BV würde das Flächenelement FH' nicht mehr mittig treffen. Deshalb muß der Antaststrahl BV um die Translationskomponente in y-Richtung parallel verschoben werden, wird zum Strahl BV' und trifft das Flächenelement FH' wieder in der Mitte. Der gestreute/reflektierte Strahl RV' gelangt wiederum unter dem Winkel β gegen die Normale im Punkt P2 auf den Detektor. Das elektrische Signal des Detektors DV entspricht bis auf eine Konstante der vertikalen Position des Objekts. Daher entspricht das Differenzsignal des Detektors der vertikalen Verschiebungskomponente.

Nun wird das zweite Flächenelement FV des Meßobjekts betrachtet. Es wird durch die Translation von SK in das Element FV' übergeführt. Die Lichtquelle QH erzeugt mit einem Lichtstrahl BH unter dem Winkel α gegen die Normale einen Lichtfleck auf der Mitte des Flächenelements FV und dieses Licht wird als Strahl RH unter dem Winkel β gegen die Normale auf den Detektor DH in dem Punkt P3 abgebildet. Durch die Objektverschiebung wird das Flächenelement FV in das Element FV' übergeführt. Der Strahl BH muß nun um die Translationskomponente in z-Richtung verschoben werden, wird zu Strahl BH' und trifft das Flächenelement FV' wieder in der Mitte. Der reflektierte Strahl RH' erreicht den Detektor DH im Punkt P4. Das Signal des Detektors DH entspricht bis auf eine Konstante der horizontalen Position des Objekts. Daher entspricht das Differenzsignal des Detektors der horizontalen Verschiebungskomponente.

Die notwendige orthogonale Nachführung der Antastung erfolgt nun in der Weise, daß das vom Detektor DV erzeugte Abstandssignal zum Nachführen des Strahls BH dient; analog dient das Signal des Detektors DH zum Nachführen des Lichtstrahls BV. Dabei sind optische Translatoren Nachführelemente, welche einen Lichtstrahl oder einen entsprechenden Strahlengang proportional zu einem elektronischen Eingangssignal verschieben.

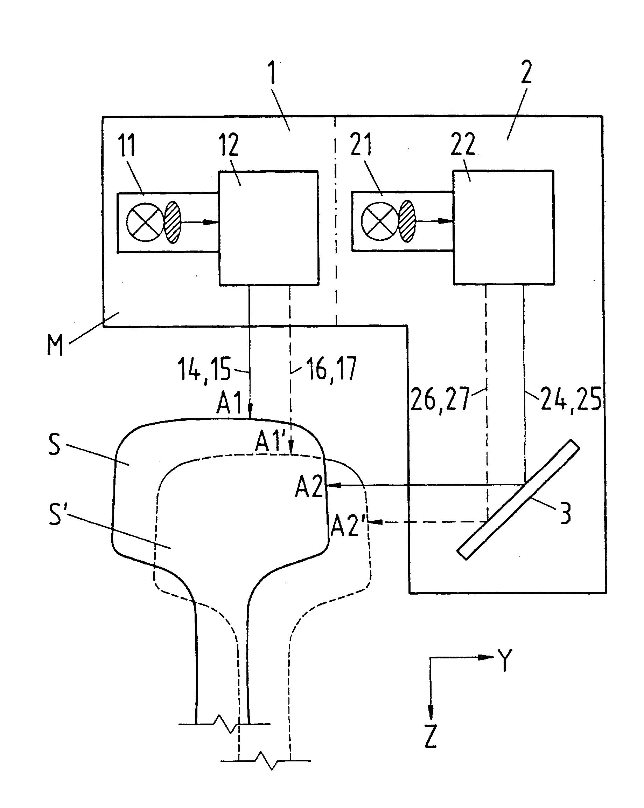

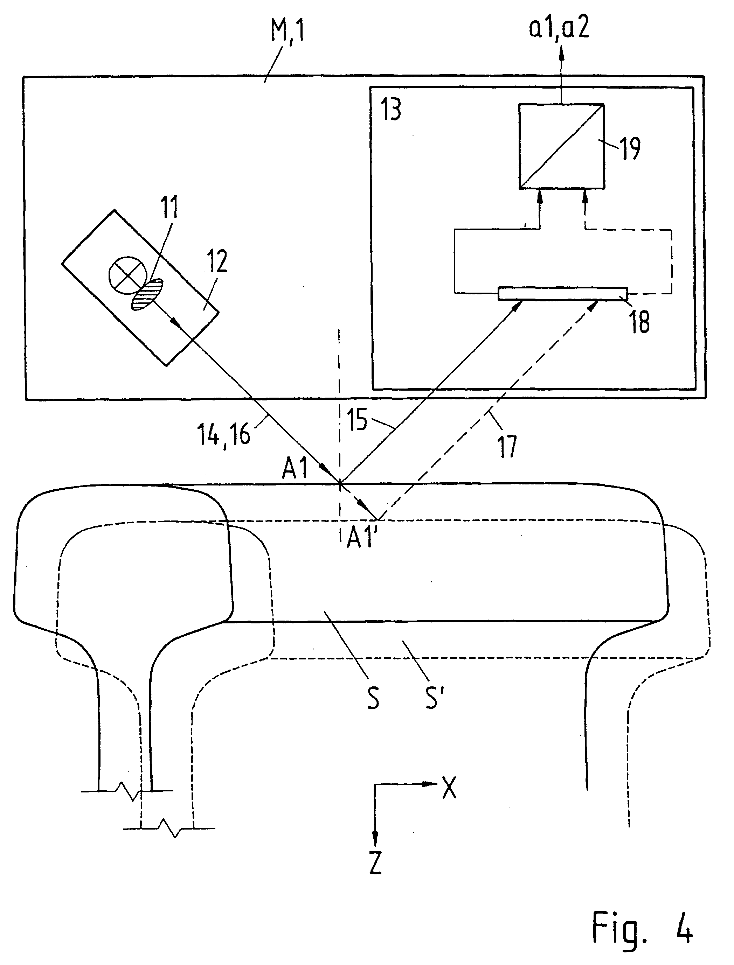

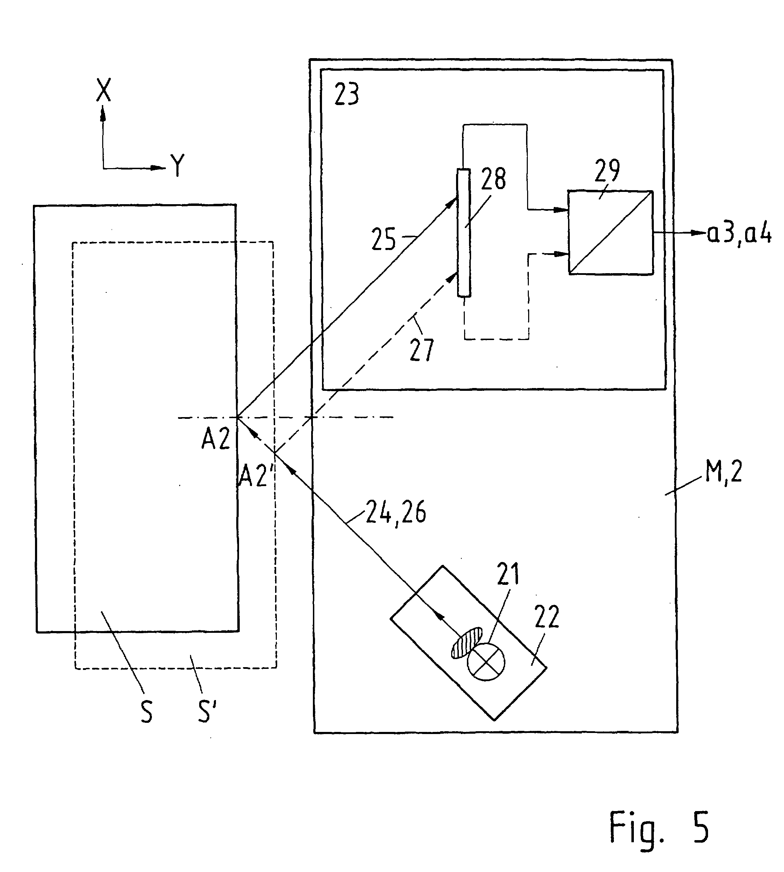

Eine Ausführungsform dieser Erfindung in Form eines Meßkopfes zeigen die Fig. 3 bis 5.

Der über einen Träger an zwei gegenüberliegenden Achslagern verankerte Meßkopf M enthält den Vertikalmeßkopf 1 und den Horizontalmeßkopf 2.

Der Vertikalmeßkopf 1 besteht aus der Lichtquelle 11, dem Strahltranslator 12, und der Triangulationskamera 13 mit dem Detektor 18 und dem Wandler 19. Die Kamera 13 ist mit einem telezentrischen Abbildungssystem ausgestattet. Ausgesendet wird der Antaststrahl 14, dieser trifft im Flächenelement Al auf die Schiene S, wird reflektiert, gelangt als Strahl 15 in die Kamera 13 auf den Detektor 18, welcher über eine Wandlerschaltung 19 das Positionssignal al ausgibt. Bei der anderen Position der Schiene S' verschiebt sich der Antaststrahl entsprechend der Linie 16, trifft die Schiene S' in Al', wird durch Reflektion in den Strahl 17 umgewandelt und erreicht den Detektor 18, wobei das Signal a2 erzeugt wird.

Der Horizontalmeßkopf 2 besteht aus der Lichtquelle 21, dem Strahltranslator 22, und der Triangulationskamera 23 mit dem Detektor 28 und dem Wandler 29. Die Kamera 23 ist mit einem telezentrischen Abbildungssystem ausgestattet. Ausgesendet wird der Antaststrahl 24, dieser trifft nach der Umlenkung durch das Umlenkelement 3 im Flächenelement A2 auf die Schiene S, wird reflektiert und gelangt als Strahl 25 in die Kamera 23 auf den Detektor 28, welcher über eine Wandlerschaltung 29 das Positionssignal a3 ausgibt. Bei der anderen Position der Schiene S' verschiebt sich der Antaststrahl entsprechend der Linie 26, trifft die Schiene S' in A2', wird durch Reflexion in den Strahl 27 umgewandelt und erreicht den Detektor im Punkt 28 und erzeugt das Signal a4.

Zur Nachsteuerung der Antaststrahlen erhält der Steuereingang des vertikalen Translators 12 das Positionssignal des horizontalen Ausgangs a4 bzw. a3 und umgekehrt erhält der Steuereingang des horizontalen Translators 22 das Positionssignal des vertikalen Ausgangs a2 bzw. a1.

Zur Störlichtunterdrückung ist jede Kamera 13, 23 mit einem (nicht gezeigten) vor dem Objektiv angeordneten und an die objektseitige Bündelöffnung angepaßten Interferenzfiltei ausgestattet. Eine der Kamera 13 bzw. 23 zugeordnete Elektronik bewirkt eine periodische Tastung der Lichtquelle 11, 21 und eine Synchrodemodulation des Empfängersignals der Kamera mit einer Messung des verbleibenden Störlichts in den Tastpausen und Differenzbildung während der Tastung.

Einfassungen der optischen Ein- und Austrittsfenster der Abstandserfassungsvorrichtung können mit (nicht dargestellten) tangential zur Oberfläche gerichteten Mikrodüsen ausgestattet sind, die über untereinander verbundenen Kanäle mit Gas und Flüssigkeit versorgt werden, und die während des Betriebs einen laminaren und parallel zu den Fensteroberflächen gerichteten Aerosolstrom zur Reinhaltung der Fenster erzeugen.

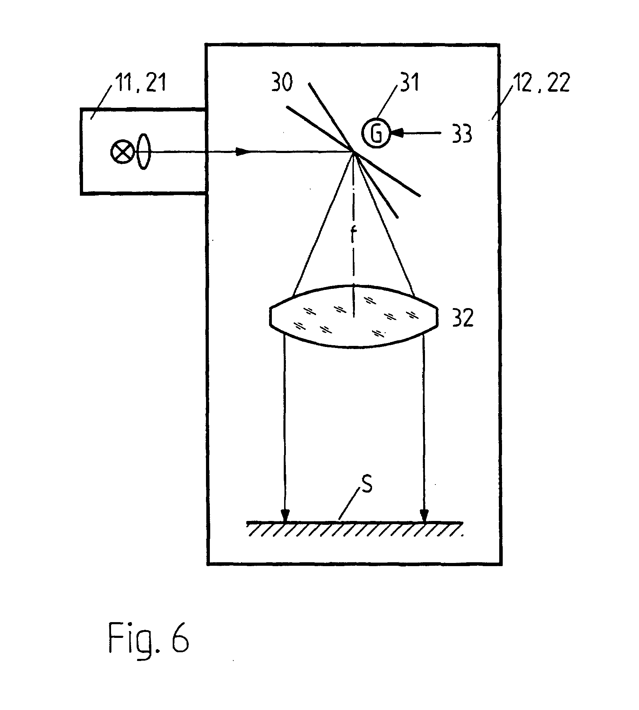

In Fig. 6. ist eine Ausführungsform eines optomechanischen Strahltranslators dargestellt. Der von der Lichtquelle 11, 21 erzeugte Strahl fällt auf die Mittelachse eines Spiegels 30, welche mit der Achse eines Galvanometerwerks 31 zusammenfällt. Diese Achse liegt in der Brennebene einer Linse 32. Durch Ansteuern des Galvanometereingangs 33 mit einem entsprechenden Positionssignal wird der Spiegel in eine bestimmte Winkelstellung gedreht, und der Lichtstrahl erreicht stets parallel zur optischen Achse die Antastoberfläche S. Dabei ist die Verschiebung des Strahls der Differenz zweier Ansteuersignale 33 proportional.

## Patentansprüche

1. Vorrichtung zur berührungslosen Erfassung des Abstandes von einem bewegten Bezugssystem gegen ein zylindrisch geformtes Objekt, mit einem ersten Triangulationsmeßsystem mit horizontaler Ebene, **dadurch gekennzeichnet, daß** es ein zweites Triangulationssystem mit vertikaler Ebene (TV,1) aufweist, daß eine Antaststrahlerzeugungsoptik (QV) des zweiten Triangulationssystems (TV,1) mit einem Strahltranslator (12) zur Parallelverschiebung des Strahlenganges einer Lichtquelle (11) ausgestattet ist und daß das Ausgangssignal (h; a3, a4) des ersten Triangulationsmeßsystems (TH) zur Ansteuerung des Strahltranslators (12) des zweiten Triangulationssystems (TV,1) verwendet ist.

2. Vorrichtung nach Anspruch 1, **dadurch gekennzeichnet, daß** eine Antaststrahlerzeugungsoptik (QH) des ersten Triangulationssystems (TH,2) mit einem Strahltranslator (22) zur Parallelverschiebung des Strahlenganges einer Lichtquelle (21) ausgestattet ist und daß das Ausgangssignal (v; a1, a2) des zweiten Triangulationsmeßsystems (TV,1) zur Ansteuerung des Strahltranslators (22) des ersten Triangulationssystems (TH,2) verwendet ist.

3. Vorrichtung nach Anspruch 1 oder 2, **dadurch gekennzeichnet, daß** die Antaststrahlen (BH, BV) und die reflektierten Strahlen (RH, RV) jedes Triangulationsmeßsystems (TV,1; TH,2) die gleichen Winkel (α = β) gegen die jeweilige Normale der von den Antaststrahlen (BH, BV) getroffenen Flächenelemente (FH, FV) des Objekts haben.

4. Vorrichtung nach Anspruch 1, 2 oder 3 **dadurch gekennzeichnet, daß** jedes Triangulationsmeßsystem eine Kamera (13, 23) mit telezentrischem Abbildungssystem enthält.

5. Vorrichtung nach einem der vorhergehenden Ansprüche, **dadurch gekennzeichnet, daß** jedes Triangulationsmeßsystem eine Kamera (13, 23) und eine dieser zugeordnete Elektronik mit einem dreistufigen System zur Störlichtunterdrückung umfaßt, bestehend aus einem vor dem Objektiv angeordneten und an die objektseitige Bündelöffnung angepaßten Interferenzfilter, einer periodischen Tastung der Lichtquelle (11, 21) und Synchrodemodulation des Empfängersignals und einer Messung des verbleibenden Störlichts in den Tastpausen und Differenzbildung während der Tastung.

6. Vorrichtung nach einem der vorhergehenden Ansprüche, **dadurch gekennzeichnet, daß** ein elektronischer Regler vorhanden ist, der - entsprechend den lokalen Reflexionsverhältnissen des Objekts - die Helligkeit der Lichtquelle (11, 21) so nachführt, daß sich ein konstanter Signalpegel an einem Detektor (18, 28) ergibt, wobei ein Intensitätssignal des Detektors (18, 28) die Regelgröße ist.

7. Vorrichtung nach einem der vorhergehenden Ansprüche, **dadurch gekennzeichnet, daß** ein elektronischer Linearisierer vorhanden ist, der die bei einer Kalibrierung ermittelten Positions-Nichtlinearitäten von Empfängerstrahlengang und Detektor zusammengenommen in abgespeicherter Form enthält, eine Korrektur der Meßwerte vornimmt.

8. Vorrichtung nach einem der vorhergehenden Ansprüche, **dadurch gekennzeichnet, daß** jedes Triangulationsmeßsystem einen Wandler (19,29) umfaßt, der als Ausgangssignal (v, a1, a2; h, a3, a4) einen Helligkeitsschwerpunkt berechnet.

9. Vorrichtung nach einem der vorhergehenden Ansprüche, **dadurch gekennzeichnet, daß** die Triangulationssysteme Kameras mit analogen Positionsdetektoren aufweisen.

10. Vorrichtung nach einem der vorhergehenden Ansprüche, **dadurch gekennzeichnet, daß** eine Überwachungselektronik vorhanden ist, die die Lichtleistung der Lichtquelle (11, 21) und den Pegel am Detektor ständig mit Bezugswerten vergleicht, wobei bei unzulässigen Abweichungen Fehlermeldungen erzeugt werden.

11. Vorrichtung nach einem der vorhergehenden Ansprüche, **dadurch gekennzeichnet, daß** jeder Strahltranslator (12, 22) durch zusätzlich zum Nachführsignal aufgeprägte oszillatorische Ansteuerung einen Teil der Objekt-Querschnittskurve antastet und jeder Empfänger mit einem zusätzlichen elektronischen Auswertesystem eine Forminformation berechnet.

12. Vorrichtung nach einem der vorhergehenden Ansprüche, **dadurch gekennzeichnet, daß** sie ohne Federelemente über eine Trägerkonstruktion direkt mit den Achslagern eines Schienenfahrzeuges verbunden ist.

13. Vorrichtung nach einem der vorhergehenden Ansprüche, **dadurch gekennzeichnet, daß** eine Vorrichtung zur Reinhaltung von optischen Fenstern vorhanden ist, wobei die Einfassungen der optischen Ein- und Austrittsfenster mit tangential zur Oberfläche gerichteten Mikrodüsen ausgestattet sind, die über untereinander verbundenen Kanäle mit Gas und Flüssigkeit versorgt werden, und die während des Betriebs einen laminaren und parallel zu den Fensteroberflächen gerichteten Aerosolstrom erzeugen.

## Claims

1. Device for non-contact measurement of the distance between a moving reference system and a cylindrically formed object, having a first triangulation measurement system with horizontal plane, **characterised in that** it has a second triangulation system with vertical plane (TV, 1), that a sensor beam generating optical system (QV) of the second triangulation system (TV, 1) is equipped with a beam translator (12) for parallel displacement of the optical path from a light source (11) and that the output signal (h; a3, a4) of the first triangulation measurement system (TH) is used for controlling the beam translator (12) of the second triangulation system (TV, 1).

2. Device according to Claim 1, **characterised in that** a sensor beam generating optical system (QH) of the first triangulation system (TH, 2) is equipped with a beam translator (22) for parallel displacement of the optical path from a light source (21) and that the output signal (v; a1, a2) of the second triangulation measurement system (TV, 1) is used for controlling the beam translator (22) of the first triangulation system (TH, 2).

3. Device according to Claim 1 or 2, **characterised in that** the sensor beams (BH, BV) and the reflected beams (RH, RV) of each triangulation measurement system (TV, 1; TH, 2) subtend the same angle (α = β) to the respective normals to the surface elements (FH, FV) of the object impinged upon by the sensor beams (BH, BV).

4. Device according to Claim 1, 2 or 3, **characterised in that** each triangulation measurement system includes a camera (13, 23) with telecentric imaging system.

5. Device according to one of the previous claims, **characterised in that** each triangulation measurement system includes a camera (13, 23) and electronics assigned to it with a three-stage system for stray light suppression comprising an interference filter arranged in front of the objective and adapted to the object-side beam opening, periodic sensing of the light source (11, 21) and synchronous demodulation of the receiver signal, and measurement of the residual stray light in the sensing intervals and subtraction during the sensing.

6. Device according to one of the previous claims, **characterised in that** an electronic controller is present which - according to the local reflection characteristics of the object - adjusts the brightness of the light source (11, 21) so that a constant signal level results in a detector (18, 28), whereby an intensity signal from the detector (18, 28) is the control variable.

7. Device according to one of the previous claims, **characterised in that** an electronic lineariser is present, which contains the positional non-linearities determined during a calibration of the receiver optical path and the detector taken together in stored form, and undertakes correction of the measured values.

8. Device according to one of the previous claims, **characterised in that** each triangulation measurement system includes a transducer (19, 29), which calculates an effective brightness as output signal (v, a1, a2; h, a3, a4).

9. Device according to one of the previous claims, **characterised in that** the triangulation systems have cameras with analogue positional detectors.

10. Device according to one of the previous claims, **characterised in that** monitoring electronics are present which constantly compare the light output of the light source (11, 21) and the level at the detector with reference values, whereby in case of inadmissible deviations, error signals are generated.

11. Device according to one of the previous claims, **characterised in that**, by means of oscillational control imposed in addition to the tracking signal, each beam translator (12, 22) senses a part of the object cross-sectional curve and each receiver calculates shape information with an additional electronic evaluation system.

12. Device according to one of the previous claims, **characterised in that** it is directly linked, without spring elements, via a support structure with the axle bearings of a rail-mounted vehicle.

13. Device according to one of the previous claims, **characterised in that** a device for keeping optical windows clean is present, whereby the borders of the optical entry and exit windows are equipped with micronozzles directed tangentially to the surface, supplied with gas and liquid through channels connected to each other, and which during operation generate a laminar aerosol stream directed parallel to the window surfaces.

## Revendications

1. Dispositif pour la détermination sans contact de la distance entre un système de référence mobile et un objet de forme cylindrique, comportant un premier système de mesure de triangulation à plan horizontal, **caractérisé en ce qu'**il comprend un deuxième système de triangulation à plan vertical (TV,1), **en ce qu'**une optique de génération de rayons de palpage (QV) du deuxième système de triangulation (TV,1) est équipée d'un translateur de rayons (12) pour la translation parallèle du trajet des rayons d'une source de lumière (11), et **en ce que** le signal de sortie (h; a3, a4) du premier système de mesure de triangulation (TH) est utilisé pour piloter le translateur de rayons (12) du deuxième système de triangulation (TV,1).

2. Dispositif selon la revendication 1, **caractérisé en ce qu'**une optique de génération de rayons de palpage (QH) du premier système de triangulation (TH,2) est équipée d'un translateur de rayons (22) pour la translation parallèle du trajet des rayons d'une source de lumière (21), et **en ce que** le signal de sortie (v ; a1, a2) du deuxième système de mesure de triangulation (TV,1) est utilisé pour piloter le translateur de rayons (22) du premier système de triangulation (TH,2).

3. Dispositif selon l'une ou l'autre des revendications 1 et 2, **caractérisé en ce que** les rayons de palpage (BH, BV) et les rayons réfléchis (RH, RV) de chaque système de mesure de triangulation (TV,1 ; TH,2) font le même angle (α = β) par rapport à la normale respective des éléments superficiels (FH, FV) de l'objet atteints par les rayons de palpage (BH, BV).

4. Dispositif selon les revendications 1, 2 ou 3, **caractérisé en ce que** chaque système de mesure de triangulation comprend une caméra (13, 23) à système d'imagerie télécentrique.

5. Dispositif selon l'une quelconque des revendications précédentes, **caractérisé en ce que** chaque système de mesure de triangulation comprend une caméra (13, 23) et une unité électronique associée à celle-ci et comportant un système à trois étages pour la suppression de lumière parasite, constitué par un filtre d'interférence agencé devant l'objectif et adapté à l'ouverture de faisceau côté objet, par un palpage périodique de la source de lumière (11, 21) et une démodulation synchrone du signal de réception et par une mesure de la lumière parasite résiduelle dans les pauses de palpage et une différentiation pendant le palpage.

6. Dispositif selon l'une quelconque des revendications précédentes, **caractérisé en ce qu'**il est prévu un régulateur électronique qui, en fonction des relations de réflexion locales de l'objet, adapte la luminosité de la source de lumière (11, 21) de telle sorte qu'il résulte un niveau de signal constant sur un détecteur (18, 28), un signal d'intensité du détecteur (18, 28) étant la grandeur de régulation.

7. Dispositif selon l'une quelconque des revendications précédentes, **caractérisé en ce qu'**il est prévu un circuit de linéarisation électronique qui reçoit les défauts de linéarité de position, déterminés lors d'un calibrage, du trajet de rayons du récepteur et du détecteur conjointement sous forme mémorisée et qui effectue une correction des valeurs de mesure.

8. Dispositif selon l'une quelconque des revendications précédentes, **caractérisé en ce que** chaque système de mesure de triangulation comprend un convertisseur (19, 29) qui calcule à titre de signal de sortie (v, a1, a2 ; h, a3, a4) un barycentre de la luminosité.

9. Dispositif selon l'une quelconque des revendications précédentes, **caractérisé en ce que** les systèmes de triangulation comprennent des caméras avec des détecteurs de position analogiques.

10. Dispositif selon l'une quelconque des revendications précédentes, **caractérisé en ce qu'**il est prévu une unité électronique de surveillance qui compare constamment la puissance lumineuse de la source de lumière (11, 21) et le niveau du détecteur avec des valeurs de référence et qui émet des messages d'erreur en cas d'écarts inadmissibles.

11. Dispositif selon l'une quelconque des revendications précédentes, **caractérisé en ce que** chaque translateur de rayons (12, 22) échantillonne une partie de la courbe de section de l'objet par un pilotage oscillatoire superposé en supplément sur le signal suiveur, et **en ce que** chaque récepteur calcule une information de forme avec un système d'évaluation électronique supplémentaire.

12. Dispositif selon l'une quelconque des revendications précédentes, **caractérisé en ce qu'**il est relié directement aux paliers d'essieux d'un véhicule ferroviaire sans éléments ressorts via une construction de support.

13. Dispositif selon l'une quelconque des revendications précédentes, **caractérisé en ce qu'**il est prévu un dispositif de nettoyage des fenêtres optiques, les encadrements des fenêtres optiques d'entrée et de sortie étant équipés de microbuses orientées tangentiellement à la surface qui sont alimentées en gaz et en liquide via des canaux reliés entre eux et qui génèrent pendant le fonctionnement un courant aérosol laminaire et dirigé parallèlement aux surfaces des fenêtres.
